# EUROPÄISCHE PATENTANMELDUNG

(11) **EP 3 722 058 A1**
(43) Veröffentlichungstag der Anmeldung: **14.10.2020**
(21) Anmeldenummer: 19182281.6
(22) Anmeldetag: 25.06.2019
(51) Int. Cl.: B28B 5/04, B28B 15/00, B28B 17/00, B25J 5/04, B28B 7/00, E21D 11/08

(54) **PRODUKTIONSANLAGE UND VERFAHREN ZUR HERSTELLUNG EINES BETONTÜBBINGS EINES TUNNELAUSBAUSYSTEMS**

(30) Priorität: 07.04.2019 DE 102019109084
(71) Anmelder: HERRENKNECHT AKTIENGESELLSCHAFT, 77963 Schwanau (DE)
(72) Erfinder: Medel, Stefan, 77723 Gengenbach (DE)
(74) Vertreter: Klickow & Wetzel PartGmbB

(57) **Zusammenfassung**

Die Erfindung betrifft eine Produktionsanlage zur Herstellung eines Betontübbings (500) eines Tunnelausbausystems mit wenigstens einer Schalung (10) für den Betontübbing (500), mit einer Umlaufanlage, die wenigstens eine Produktionslinie (200) mit wenigstens zwei Arbeitsstationen (210, 220, 230, 240, 250, 260) wenigstens eine Härtestation (300), und wenigstens einen Transportweg (110) zwischen den wenigstens zwei Arbeitsstationen (210, 220, 230, 240, 250, 260) zum Ausführen jeweils wenigstens eines Arbeitsschrittes zur Herstellung des Betontübbings (500) und der wenigstens einen Härtestation (300) zum Härten des eingefüllten Betons in der Schalung (10) zum Herstellen des Betontübbings (500) aufweist, wobei der Transportweg (110) wenigstens ein Transportmittel (112) aufweist, auf dem die wenigstens eine Schalung (10) angeordnet ist. Erfindungsgemäß ist dabei vorgesehen, dass wenigstens ein Roboter (140) zum Ausführen des wenigstens einen Arbeitsschritt an einer der wenigstens zweit Arbeitsstationen (210, 220, 230, 240, 250, 260) vorgesehen ist, dass wenigstens ein Fahrweg (120) vorgesehen ist, der sich wenigstens teilweise entlang der wenigstens einen Produktionslinie (200) erstreckt, dass wenigstens ein Fahrelement (130) vorgesehen ist, an dem der wenigstens eine Roboter (140) mit einer Basis (131) angeordnet ist, und mit dem der wenigstens eine Roboter (140) entlang der wenigstens einen Produktionslinie (200) verfahrbar ist, und dass die Basis (131) des wenigstens einen Roboters (140) an dem wenigstens einen Fahrelement (130) entlang des Fahrelements (130) in die Arbeitsstation (210, 220, 230, 240, 250, 260) hinein bewegbar ist.

## Beschreibung

Die Erfindung betrifft eine Produktionsanlage zur Herstellung eines Betontübbings eines Tunnelausbausystems mit wenigstens einer Schalung für den Betontübbing, mit einer Umlaufanlage, die wenigstens eine Produktionslinie mit wenigstens zwei Arbeitsstationen wenigstens eine Härtestation, und wenigstens einen Transportweg zwischen den wenigstens zwei Arbeitsstationen zum Ausführen jeweils wenigstens eines Arbeitsschrittes zur Herstellung des Betontübbings und der wenigstens einen Härtestation zum Härten des eingefüllten Betons in der Schalung zum Herstellen des Betontübbings aufweist, wobei der Transportweg wenigstens ein Transportmittel aufweist, auf dem die wenigstens eine Schalung angeordnet ist. Weiterhin betrifft die Erfindung ein Verfahren, und eine Steuerung dazu.

Zur Betontübbingproduktion werden die einzelnen Arbeitsschritte zur Herstellung eines Betontübbings manuell durchgeführt. Neben den dabei anfallenden Arbeitskosten ist die auszuführende Arbeit monoton und für die Mitarbeiter anstrengend. Weiterhin werden die Tätigkeiten mit schweren Gegenständen durchgeführt, sodass Verletzungsgefahr gegeben ist. Trotz der wiederkehrenden Tätigkeiten ist es gleichzeitig notwendig, die Arbeiten mit sehr hoher Präzision durchzuführen.

Aufgabe der Erfindung ist daher, zumindest Teilaspekte der zuvor genannten Probleme zu reduzieren.

Gelöst wird die Aufgabe dadurch, dass wenigstens ein Roboter zum Ausführen des wenigstens einen Arbeitsschritt an einer der wenigstens zweit Arbeitsstationen vorgesehen ist, dass wenigstens ein Fahrweg vorgesehen ist, der sich wenigstens teilweise entlang der wenigstens einen Produktionslinie erstreckt dass wenigstens ein Fahrelement vorgesehen ist, an dem der wenigstens eine Roboter mit einer Basis angeordnet ist, und mit dem der wenigstens eine Roboter entlang der wenigstens einen Produktionslinie verfahrbar ist, und dass die Basis des wenigstens einen Roboters an dem wenigstens einen Fahrelement entlang des Fahrelements in die Arbeitsstation hinein bewegbar ist.

Hierdurch wird es auf einfache Weise möglich, eine Automatisierung der Produktionsanlage durchzuführen. Dabei kann gleichzeitig die notwendige Präzision beibehalten werden.

Eine weitere Lehre der Erfindung sieht vor, dass der Fahrweg oberhalb der Arbeitsstation, bevorzugt auf Pfeilern, angeordnet ist. Durch das Anordnen des Fahrwegs oberhalb der Arbeitsstationen wird es möglich, mit dem Roboter von oben in den Bereich der Arbeitsstationen einzugreifen und hier mit Bezug auf die eingesetzte Schalung auf einfache Weise die notwendigen Arbeitsstellen zu erreichen.

Eine weitere Lehre der Erfindung sieht vor, dass der Fahrweg jeweils wenigstens eine Fahrspur beidseitig entlang der wenigstens einen Produktionslinie aufweist. Dabei ist vorteilhaft, dass es sich bei dem Fahrelement um wenigstens eine Traverse handelt, die mit ihren Enden jeweils auf einer Fahrspur verfahrbar ist, und/oder an der die Basis des wenigstens einen Roboters über die Arbeitsstation verfahrbar angeordnet ist. Durch das Aufteilen des Fahrwegs in Fahrspuren ist es möglich, entweder ein verfahrbares Portal einzusetzen, oder, wenn der Fahrweg oberhalb der Arbeitsstationen angeordnet ist, hier ein präzises Verfahren zu ermöglichen. Wird hierbei eine Traverse verwendet, kann der Roboter wiederum auf einfache Weise im Raum der Arbeitsstationen angeordnet werden. Wird dabei an der Traverse eine Basis vorgesehen, die ebenfalls verfahrbar ist, erhöht sich der Freiheitsgrad der Anordnung des im Raum der Arbeitsstationen auf einfache Weise.

Eine weitere Lehre der Erfindung sieht vor, dass der Roboter ein Werkzeug aufweist und so ausgeführt ist, dass das Werkzeug im Raum der Arbeitsstation bewegbar und verschwenkbar ist. Dabei ist vorteilhaft, dass das Werkzeug wechselbar in Bezug auf den Roboter ausgeführt ist. Weiterhin ist vorteilhaft, dass das wechselbare Werkzeug in einem mit dem Roboter verfahrbaren oder an der Arbeitsstation befindlichen Aufbewahrungsraum enthalten ist. Wird der Roboter mit Armen und Gelenken sowie Drehgelenken und Antrieben versehen, ist es des Weiteren möglich, den Freiheitsgrad der Anordnung eines Werkzeugs, das sich beispielsweise am Roboter angeordnet befindet, im Raum der Arbeitsstation auf einfache Weise zu erhöhen. Ist das Werkzeug dabei noch wechselbar ausgeführt, können mehrere Arbeitsschritte an einer Arbeitsstation von demselben Roboter ausgeführt werden. Je nach Art der auszuführenden Tätigkeiten und insbesondere auch nach Größe der Werkzeuge ist es dabei vorteilhaft die Werkzeuge entweder direkt fahrbar im Bereich des Roboters oder an der jeweiligen Arbeitsstation anzuordnen. Auch hierdurch ist es auf einfache Weise möglich, unterschiedliche Arbeitsschritte mit denselben Werkzeugen durchzuführen. Beispielsweise kann ein Drehmomentschrauber verwendet werden, um Befestigungen zu lösen oder herzustellen und gleichzeitig auch andere Arbeitsschritte, die einen Drehantrieb erfordern, durchzuführen.

Vorteilhafterweise handelt es sich bei dem Werkzeug um einen Drehmomentschrauber, eine Bürste, eine Walze, ein Vermessungselement, eine Düse, einen Scanner, einen Greifer, oder eine Kamera.

Eine weitere Lehre der Erfindung sieht vor, dass die wenigstens eine Arbeitsstation eine Station zum Öffnen oder Schließen der Schalung oder eines Deckels der Schalung, eine Station zum Entnehmen des Betontübbings, eine Station zum Reinigen der Schalung, eine Station zum Vorbereiten der Schalung zum nachfolgenden Einbringen von Beton, eine Station zum Bestücken der Schalung mit wenigstens einem Element des Betontübbings, eine Station zum Vermessen der Schalung, eine Station zum Befüllen der Schalung mit Beton und/oder eine Station zum Behandeln der Oberfläche des eingebrachten Betons des Betontübbings ist. Dabei ist vorteilhaft, dass es sich bei dem wenigstens einen Element um eine Dichtung, einen Schutzliner, ein Bewehrungselement, einen Sensor, insbesondere einen Temperatursensor, ein Entwässerungselement, ein Kunststoffelement und/oder ein Erektordübel handelt.

Gelöst wird die Aufgabe weiterhin durch ein Verfahren zur Herstellung eines Betontübbings eines Tunnelausbausystems mit wenigstens einer Schalung insbesondere mit einer Produktionsanlage nach einem der Ansprüchen 1 bis 10, mit den Schritten:
1. Anordnen einer Schalung in einer jeweiligen Arbeitsstation entlang einer Produktionslinie der Produktionsanlage, bevorzugt positionsgenau,
2. falls erforderlich, Erkennen des Schalungstyps in der Arbeitsstation,
3. falls erforderlich, Aufnehmen des zur Durchführung eines Arbeitsschrittes notwendigen Werkzeugs durch einen Roboter,
4. Verfahren einer Basis des Roboters entlang eines Fahrwegs und/oder einer Traverse zum X, Y-Ausrichten an eine notwendige Position zur Durchführung des Arbeitsschrittes an der Arbeitsstation,
5. Ausführen und Abschließen des Arbeitsschritts durch den Roboter mit dem dafür notwendigen Werkzeug,
6. falls erforderlich Überprüfen des Abschlusses des Arbeitsschrittes, bevorzugt durch den Roboter, mit einem dafür ausgelegten Werkzeug,
7. falls erforderlich, Wiederholen der Schritte 3 bis 6 zur Durchführung eines weiteren Arbeitsschrittes an der Arbeitsstation,
8. Transport der Schalung zur nächsten Arbeitsstation,
9. falls erforderlich Wiederholen der Schritte 3 bis 8 zur Durchführung eines Arbeitsschrittes an der nächsten Arbeitsstation.

Durch den Einsatz des erfindungsgemäßen Verfahrens wird es auf einfache Weise möglich, die Qualität der Tübbingproduktion zu erhöhen. Gleichzeitig kann auf einfache Weise präzise der Materialeinsatz bei der Tübbingproduktion erfasst und ausgewertet werden. Zusätzlich ist es möglich, die Herstellungsprozesse jedes einzelnen Tübbings auf einfache Weise zu dokumentieren. Hierdurch wird es möglich, dass es im Zusammenhang mit jedem einzelnen hergestellten Tübbing auch noch später im montierten Tunnel ein Nachvollziehen dessen Herstellung und damit auch gleichzeitig das Nachweisen des Herstellungsprozesses möglich ist.

Eine weitere Lehre der Erfindung sieht vor, dass es sich bei dem Werkzeug um einen Drehmomentschrauber, eine Bürste, eine Walze, ein Vermessungselement, eine Düse, einen Scanner, einen Greifer, oder eine Kamera, handelt.

Eine weitere Lehre der Erfindung sieht vor, dass die wenigstens eine Arbeitsstation eine Station zum Öffnen oder Schließen der Schalung oder eines Deckels der Schalung, eine Station zum Entnehmen des Betontübbings, eine Station zum Reinigen der Schalung, eine Station zum Vorbereiten der Schalung zum nachfolgenden Einbringen von Beton, eine Station zum Bestücken der Schalung mit Elementen des Betontübbings, eine Station zum Vermessen der Schalung, eine Station zum Befüllen der Schalung mit Beton und/oder eine Station zum Behandeln der Oberfläche des eingebrachten Betons des Betontübbings ist.

Eine weitere Lehre der Erfindung sieht vor, dass das wechselbare Werkzeug aus einem mit dem Roboter verfahrbaren oder an der Arbeitsstation befindlichen Aufbewahrungsraum entnommen oder abgelegt wird.

Eine weitere Lehre der Erfindung sieht vor, dass eine Arbeitsschritt ein Öffnen oder Schließen der Schalung oder des Deckels der Schalung, Entnehmen des Betontübbings, ein Reinigen der Schalung, ein Vorbereiten der Schalung zum nachfolgenden Einbringen von Beton, ein Bestücken der Schalung mit wenigsten einem Element des Betontübbings, ein Vermessen der Schalung, ein Befüllen der Schalung mit Beton oder ein Behandeln der Oberfläche des eingebrachten Betons des Betontübbings ist. Dabei ist vorteilhaft, dass es sich bei dem wenigstens einen Element um eine Dichtung, einen Schutzliner, ein Bewehrungselement, einen Sensor, insbesondere einen Temperatursensor, ein Entwässerungselement, ein Kunststoffelement und/oder ein Erektordübel handelt.

Eine weitere Lehre der Erfindung sieht vor, dass es sich bei dem Werkzeug um einen Drehmomentschrauber, eine Bürste, eine Walze, ein Vermessungselement, eine Düse, einen Scanner, einen Greifer, oder eine Kamera, handelt.

Gelöst wird die Aufgabe weiterhin durch eine Steuerung des zuvor beschriebenen Verfahrens insbesondere in Verbindung mit einer zuvor beschriebenen Produktionsanlage, bei dem Arbeitsschritte an Arbeitsstationen abgearbeitet werden, indem Daten und/oder Sensordaten ausgewertet werden, basierend auf den Daten und/oder Sensordaten ein Roboter an eine X,Y-Position entlang einer Produktionslinie positioniert wird, basierend auf den Daten und/oder Sensordaten ein Werkzeug zur Ausführung des Arbeitsschritts ausgewählt wird und der Arbeitsschritt durch Übergabe von Steuerungsdaten an den Roboter und/oder das Werkzeug ausgeführt werden. Hierdurch wird es auf einfache Weise möglich, die Qualität der Tübbingproduktion zu erhöhen. Gleichzeitig kann auf einfache Weise präzise der Materialeinsatz bei der Tübbingproduktion erfasst und ausgewertet werden. Zusätzlich ist es möglich, die Herstellungsprozesse jedes einzelnen Tübbings auf einfache Weise zu dokumentieren.

Gelöst wird die Aufgabe weiterhin durch eine Schalung zur Herstellung eines Betontübbings eines Tunnelausbausystems, bevorzugt zum Einsatz in einer zuvor beschriebenen Produktionsanlage oder bei der Durchführung eines zuvor beschriebenen Verfahrens, mit einer Betonwanne mit einem Bodenabschnitt und daran fest oder verschwenkbar angeordneten Wandabschnitten, wobei wenigstens ein Wandabschnitte verschwenkbar ausgeführt sind, und wobei die Wandabschnitte zum Herstellen einer geschlossenen Betonwanne miteinander mittels Schrauben verschraubt werden, wobei im Bereich wenigstens einer Schraube eine Öffnung zum Eingreifen als Momentabtragelements eines robotergeführten und gesteuerten Drehmomentschraubers vorgesehen ist.

Hierdurch wird es auf einfache Weise möglich, das Öffnen und Schließen der Schalung zu automatisieren.

Vorteilhaft ist dabei, die Schraubverbindung eine Schraube mit einem entlang wenigstens eines Teils der Schraube angeordneten Federelement aufweist. Hierdurch wird es auf einfache Weise möglich, die Schraubverbindung automatisiert zu lösen, ohne dass eine Zugkraft auf die Schraube für sich genommen durch das entsprechende Schraubwerkzeug, hier bevorzugt ein Drehmomentschraube, ausgeübt werden muss.

Vorteilhaft ist dabei weiterhin, dass die verschwenkbaren Wandabschnitte mittels eines Antriebs verschwenkbar sind, wobei es sich bevorzugt um wenigstens einen Spindelantrieb oder um wenigstens einen Hydraulikzylinder handelt. Hierdurch wird es auf einfache Weise möglich, das Anordnen der Seitenwände in den Positionen bereitzustellen, in denen ein Verschrauben möglich wird.

Nachfolgend wird die Erfindung anhand von Ausführungsbeispielen in Verbindung mit einer Zeichnung näher erläutert. Dabei zeigen:
- Figur 1: eine Draufsicht auf eine erfindungsgemäße Produktionsanlage,
- Figur 2: eine räumliche Ansicht zu Figur 1,
- Figur 3: eine Seitenansicht zu Figur 1,
- Figur 4: eine weitere räumliche Ansicht zu Figur 1,
- Figur 5: eine räumliche Ausschnittsvergrößerung zu Figur 3,
- Figur 6: eine räumliche Ausschnittsansicht zu Figur 5,
- Figur 7: eine räumliche Ansicht einer erfindungsgemäßen Schalung,
- Figur 8: eine vergrößerte Ausschnittsansicht zu Figur 7,
- Figur 9: eine räumliche Ansicht einer geöffneten erfindungsgemäßen Schalung, und
- Figur 10: eine Schnittansicht durch ein Befestigungselement zu Figur 7.

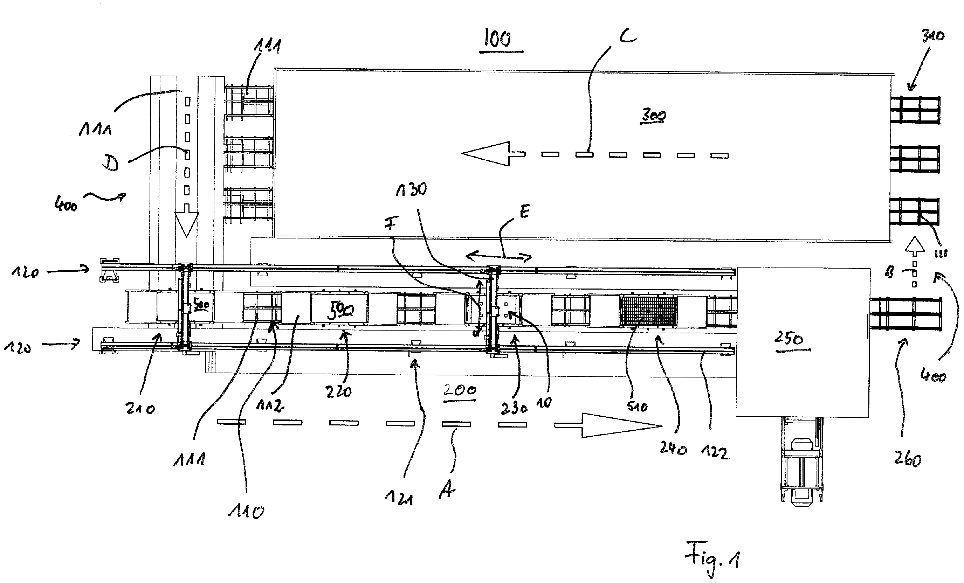

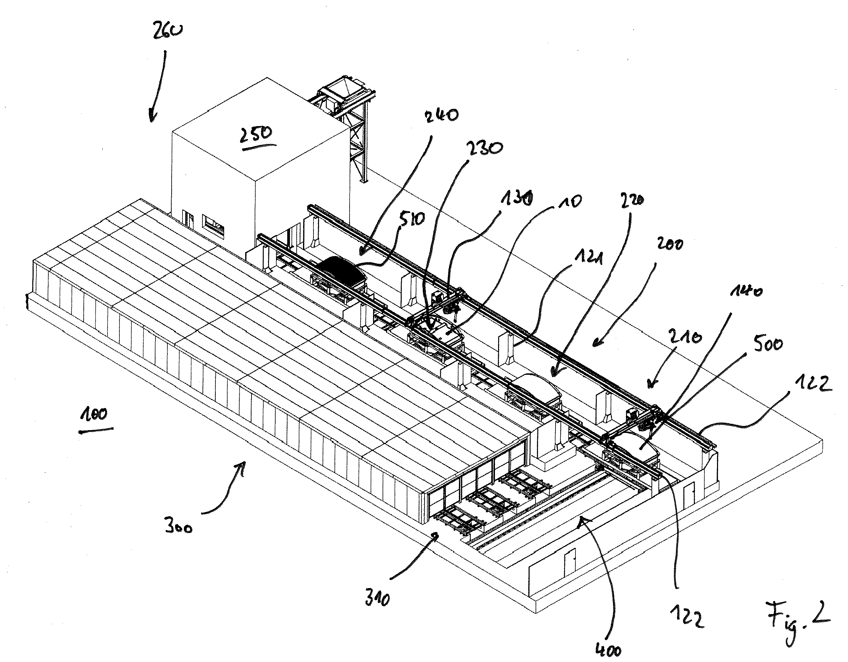

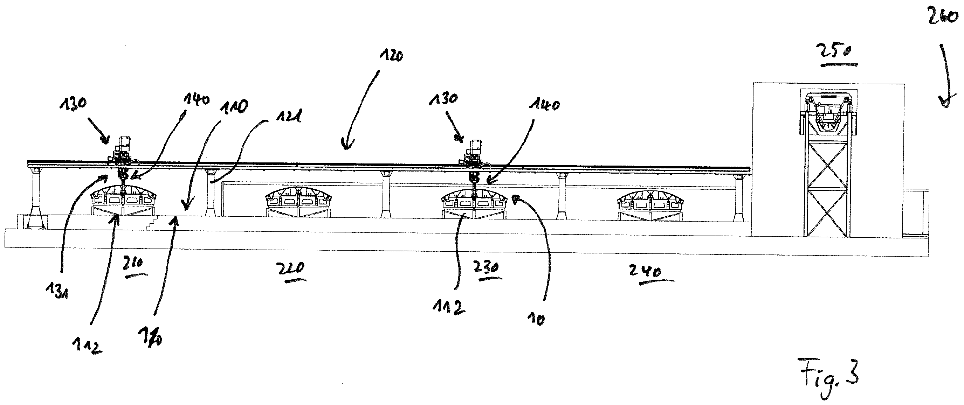

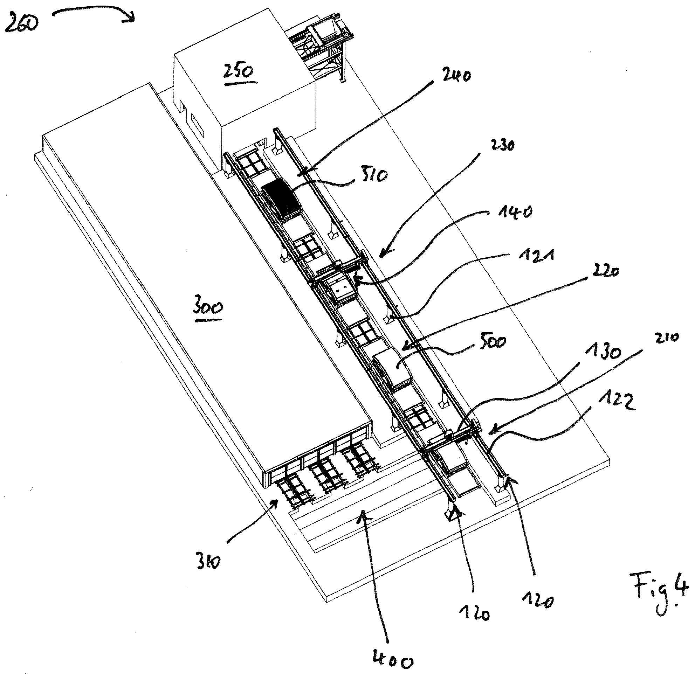

Figur 1 bis 4 zeigt eine erfindungsgemäße Produktionsanlage 100. Die Produktionsanlage 100 ist dabei beispielsweise als Umlaufanlage ausgeführt. Die Umlaufanlage besteht dabei aus einer Produktionslinie 200 und einem Härtetunnel 300. Der Härtetunnel 300 weist dabei mindestens eine Härtelinie 310, in Figur 1 dargestellt drei Härtelinie 310, auf. Die Produktionslinie 200 und der Härtetunnel 300 bzw. dessen Härtelinien 310 sind mit einem Querförderer 400 verbunden.

Die Produktionsanlage 100 weist einen Transportweg 110 auf. Der Transportweg 110 weist eine Fahrbahn 111 auf, auf der ein Transportmittel 112 verfahrbar ist. Auf dem Transportmittel 112 ist eine erfindungsgemäße Schalung 10 angeordnet. Die Transportmittel 112 bewegen sich entlang des Transportwegs 110 in Pfeilrichtung A durch die Produktionslinie 200.

Nach Durchlaufen der Produktionslinie 200 werden sie vom Querförderer 400 in Pfeilrichtung B den Härtelinien 310 des Härtetunnels 300 zugeführt. Auch der Querförderer 400 weist eine Fahrbahn 111 auf, auf der die Transportmittel 112 bewegt werden. Gleiches gilt auch für die Härtelinien 310 des Härtetunnels 300.

Nach Durchlaufen des Härtetunnels 300 in Pfeilrichtung C werden die Transportmittel 112 mittels des Querförderer 400 in Pfeilrichtung D der Produktionslinie 200 wieder zugeführt. Der Umlauf ist dann abgeschlossen.

In Pfeilrichtung A, in Figur 1 von links nach rechts gesehen, weist die Produktionslinie 200 hier beispielhaft sechs Arbeitsstationen 210 - 260 auf.

An der ersten Arbeitsstation 210 wird die Schalung 10 wie nachfolgend erläutert, geöffnet.

An der zweiten Arbeitsstation 220 wird der fertige Tübbing 500 mittels eines Hebeelements (nicht dargestellt) aus der Schalung 10 entnommen.

An der dritten Arbeitsstation 230 wird die Schalung 10 gereinigt und für die Aufnahme von Einbauelemente sowie die Betonierung vorbereitet. Hierzu wird beispielsweise ein Trennmittel (Schalungsöl) auf alle Flächen und Teile der Schalung aufgebracht, die in den Kontakt mit dem Beton des herzustellenden Tübbings 500 kommen und nicht Bestandteil des Tübbings 500 werden sollen.

An der vierten Arbeitsstation 240 wird die Schalung 10 mit den Einbauteilen bestückt, die Bestandteil des fertigen Tübbings 500 sind. Hierbei handelt es sich beispielsweise um eine Bewehrung 510, Elektrodübel (nicht dargestellt), einen Schutzliner oder dergleichen.

Nach Einbringen der Einbauteile, die alternativ auch vollständig oder teilweise an der dritten Arbeitsstation 230 nach Abschluss der Reinigung und der Vorbereitung in die Schalung 10 eingebracht werden können, wird die Schalung 10 mit den eingebrachten Komponenten kontrolliert, um zu gewährleisten, dass die Schalung 10 korrekt zusammengebaut ist und die Einbauteile des Tübbings 500 korrekt angeordnet sind.

Das Bestücken der Schalung 10 mit den Einbauteilen kann auch aufgeteilt in den Arbeitsstationen 230, 240 erfolgen.

In der fünften Arbeitsstation 250 werden, soweit nicht vorher bereits geschehen, die evtl. vorgesehenen Deckel (nicht dargestellt) der Schalung montiert, der einzubringende Beton vorbereitet nach notwendiger Mixtur und in notwendiger Menge und in die Schalung 10 eingebracht. Anschließend wird der eingebrachte Beton in bekannter Weise verdichtet.

An der sechsten Arbeitsstation 260 wird die Betonoberfläche 520 des Tübbings zumindest im nicht durch Deckel abgedeckten Bereich behandelt, beispielsweise geglättet, und sofern an dieser Stelle erforderlich die Deckel von der Schalung demontiert. Dieses kann aber auch zu einem späteren Zeitpunkt erfolgen.

Die Produktionslinie 200 wird dann nach der sechsten Arbeitsstation 260 in diesem Beispiel verlassen, in dem das Transportmittel 112 mit der Schalung 10 und dem darin vollständig hergestellten rohen Tübbing 500 an den Querförderer 400 übergeben wird.

Die Anzahl der Arbeitsstationen ist hier nur beispielhaft zu sehen. Es ist einem Fachmann ohne weiteres möglich, die Anzahl der Arbeitsstationen durch Zusammenfassen oder Entkoppeln von einzelnen Arbeitsschritten entsprechend den Notwendigkeiten anzupassen.

Weiterhin sieht die Produktionsanlage 100 ihr Beispielshaft für die ersten vier Arbeitsstationen 210, 220, 230, 240 eine Arbeitsautomatisierung vor. Hierfür ist beidseitig des Transportwegs 110 der Produktionslinie 200 ein Fahrweg 120 angeordnet, der auf Pfeilern 121 erhöht vorgesehen ist. Der Fahrweg 120 weist dabei jeweils eine Fahrspur 122 auf, die beidseitig der Produktionslinie 200 vorgesehen ist. Die beiden Fahrspuren 122 sind mit einer Traverse 130 verbunden, die auf dem Fahrweg 120 in Doppelpfeilrichtung E verfahrbar ist. An der Traverse 130 ist in Doppelpfeilrichtung F bewegbar an dessen Unterseite eine Basis 131 angeordnet. Das Bewegen erfolgt hier beispielhaft mit einem Antrieb 132.

Auf der Basis 131 ist ein Roboter 140 angeordnet. Der Roboter 140 weist Arme 141, Schwenkgelenke 142 und/oder Drehgelenke 143 sowie Antriebe 144 auf. Weiterhin ist am der Basis 131 gegenüberliegenden Ende des Roboters 140 ein Werkzeug 150 angeordnet. Das Werkzeug 150 ist dabei bevorzugt wechselbar ausgeführt, sodass je nach auszuführendem Arbeitsschritt unterschiedliche Werkzeuge 150 verwendet werden können.

Bedingt durch die Verfahrbarkeit der Traverse 130 in Doppelpfeilrichtung E entlang des Fahrwerks 120 sowie der Verfahrbarkeit der Basis 131 in Doppelpfeilrichtung F entlang der Traverse 130 ist es möglich, die Basis 131 des Roboters 140 in X, Y Richtung über der Produktionslinie 200 anzuordnen. Weiterhin ist es durch den Aufbau des Roboters 140 möglich, das Werkzeug 150 an einem beliebigen Punkt (X, Y, Z) im Raum der Produktionslinie 200 anzuordnen, sodass mit dem jeweiligen Werkzeug 150 Arbeiten an oder in der Schalung 10 vom Roboter 140 mit dessen Werkzeug 150 ausführbar sind.

In Abhängigkeit der Arbeitsstationen 210 - 260, deren Anordnung und Ausführung und der gleichzeitig in Ihnen auszuführenden Arbeitsschritte ist es möglich, eine oder auch mehrere, hier dargestellte zwei, Traversen 130 und Roboter 140 in der Produktionslinie 200 vorzusehen.

Die Werkzeuge 150 können dabei in einer Werkzeugbox (nicht dargestellt) entweder direkt an der Traverse 130 oder an der jeweiligen Arbeitsstation 210 - 260 vorgehalten werden, sodass der Roboter 150 der beispielsweise ein wechselbaren Werkzeuganschlusssystem aufweist (nicht dargestellt), sich mit einem Werkzeug verbinden kann, dieses aus der jeweiligen Box entfernen kann, den Arbeitsschritt ausführen kann, dass Werkzeug 150 dann nach Beendigung des Arbeitsschrittes wieder in die Box einbringen kann, und sich von diesen lösen kann.

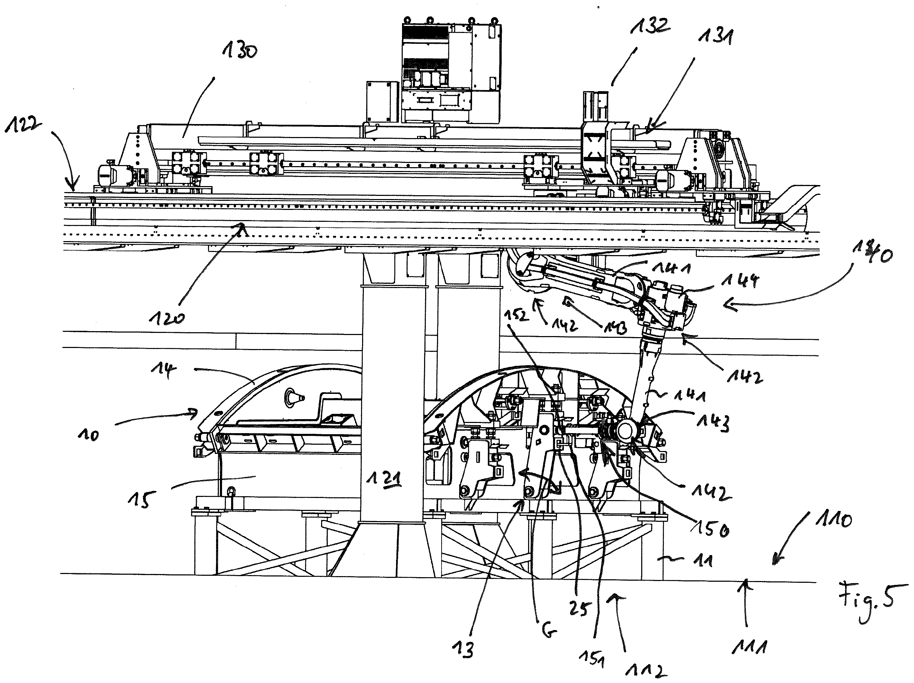

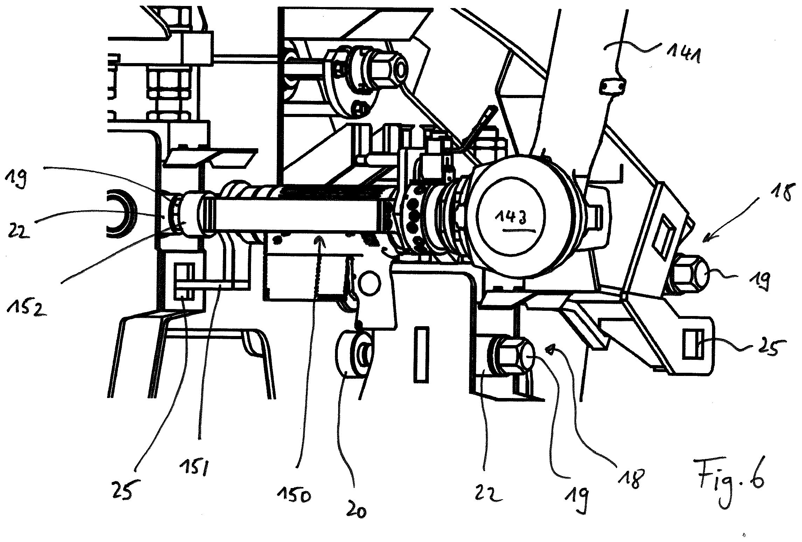

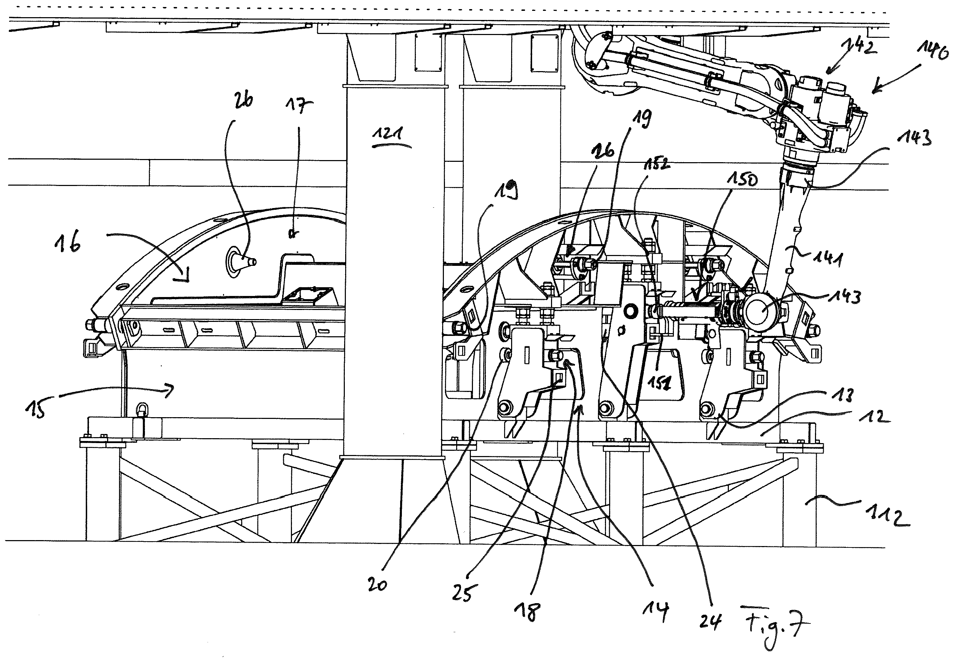

Die Schalung 10 (siehe Fig. 5 bis 10) ist beispielsweise über einen Sockel 11 des Transportmittels 112 angeordnet. Die Schalung selbst weist eine Basis 12 auf, mit der sie auf dem Sockel 11 anordbar ist. Über der Basis ist ein Innenraum 17 als eine Betonwanne vorgesehen, der aus einem Boden 16 und Innnenwänden der Stirnwände 15 und Seitenwände 14 gebildet ist. Über Schwenkverbindungen 13 ist die Basis zwölf in dieser Ausführungsform nicht beschränkend mit zwei Seitenwänden 14 der Schalung 10 verschwenkbar verbunden. Weiterhin weist die Schalung 10 zwei Stirnwände 15 auf. In dem in den Figuren gezeigten Schalungen sind die Stirnwände 15 fest mit der Basis 12 verbunden. Es ist hier genauso möglich, dass auch die Stirnwände über Gelenksverbindungen mit der Basis 12 fest schwenkbar verbunden sind.

Weiterhin weist die Schalung 10 einen Boden 16 auf, der einen Innenraum 17 der Schalung 10 zusammen mit den entsprechenden inneren Flächenabschnitten der Seitenwände 14 und der Stirnwände 15 als eine Betonwanne bildet. In diese Betonwanne bzw. in diesen Innenraum 17 werden die Einbauteile und der Beton eingebracht.

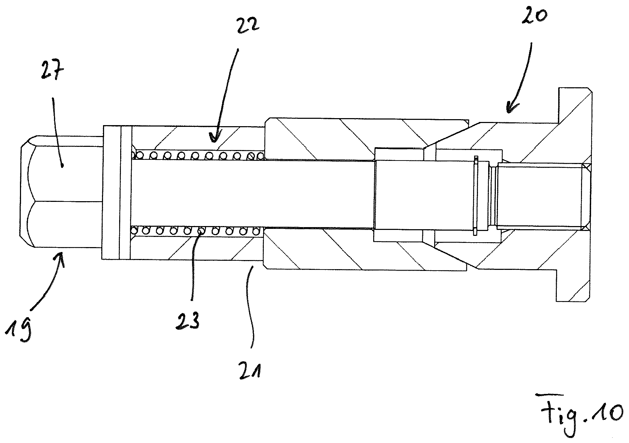

Die Seitenwände 14 werden über Schraubverbindungen mit der Basis 12 und den Stirnwänden 15 verbunden. Eine solche Schraubverbindung ist geschnitten in Figur 10 dargestellt. Sie weist eine Schraube 19 auf, die in ein Gewindeelement 20, die an der Basis 12 oder beispielsweise an der Stirnwand 15 angeordnet ist, eingeschraubt wird. Die Schraube 19 ist eingesteckt in eine beispielsweise an der Seitenwand 14 über einer durchgängigen Öffnung (nicht dargestellt) angebrachten Hülse 21. Die Hülse 21 weist dabei einen Federabschnitt 22 auf, in dem eine Feder 23 vorgesehen ist.

Sind das Gewindeelement 20 und die Hülse 21 fluchtend übereinander angeordnet, wenn beispielsweise die Seitenwand 14 gegen die Stirnwand 15 und die Basis 12 angeordnet ist, kann die Schraube 19 in das Gewindeelement 20 eingeschraubt werden und damit die Seitenwand 14 gegen die Basis 12 und /oder die Stirnwand 15 arretieren.

Dafür ist ein Antriebssystem vorgesehen, dass das Bewegen der Seitenwände 14 gegen die Basis 12 und/oder die Stirnwände 15 alternativ auch den Boden 16 ermöglicht. Beispielsweise kann es sich hierbei um ein Spindelsystem handeln, dass, wenn es angetrieben wird, die Seitenwände 14 um die Schwenkverbindung 13 in Doppelpfeilrichtung G entweder von der Basis 12 und den Stirnwänden 15 weg oder zu diesen hinbewegt. Alternativ können hierfür auch andere Antriebssysteme wie beispielsweise Hydraulikzylinder eingesetzt werden.

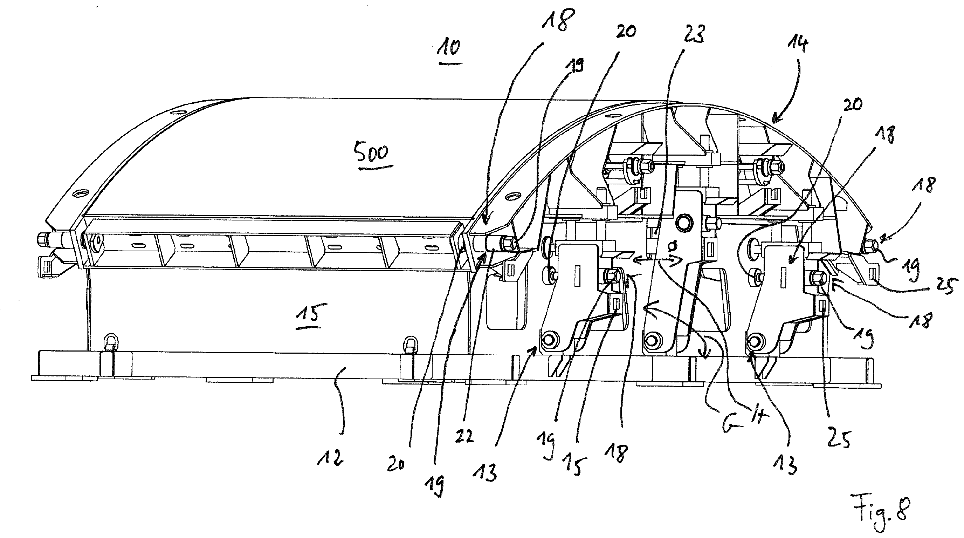

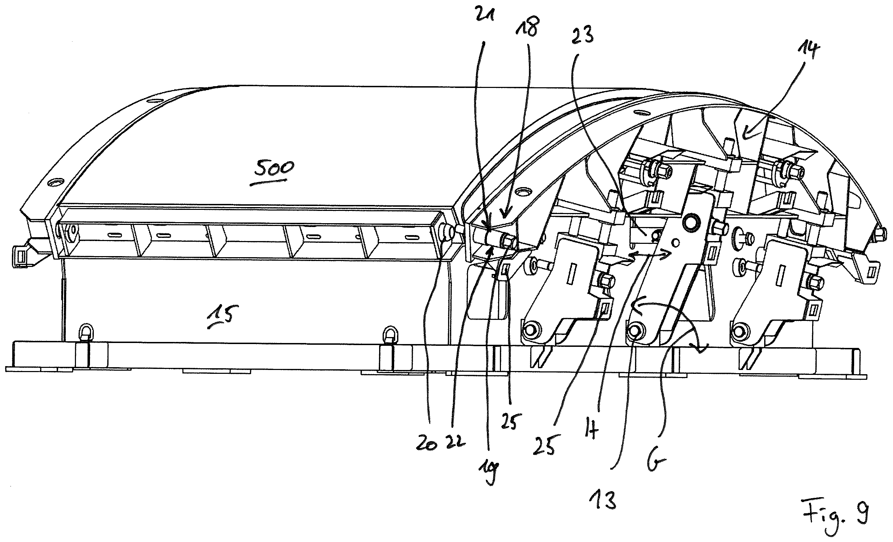

In einer bevorzugten Ausführungsform lässt sich die Zentralspindel auch mit einem geeigneten Werkzeug, vorzugsweise dem gleichen Werkzeug, mit dem die Schrauben 19 gelöst und festgezogen werden, antreiben. In den Figuren 8 und 9 ist ein Stabelement 24 gezeigt, dass von der Zentralspindel in Doppelpfeilrichtung H bewegbar ist.

Dass Einschrauben der Schraube 19 in das Gewindeelement 20 erfolgt gegen das Federelement 23, bzw. beim Ausschrauben drückt das Federelement 23 die Schraube 19 nach außen, sodass sich diese leichter beim Ausschrauben aus dem Gewindeelement 20 heraus bewegt.

Hierdurch ist es auf einfache Weise möglich, dass beim Einsatz eines Drehmomentschraubers als Werkzeug 150 am Roboter 140 dieser die Schraube 19 aus dem Gewindeelement 20 herausschrauben kann, sodass sich diese sicher löst, ohne dass der Drehmomentschrauber eine Zugkraft auf die Schraube 19 ausüben muss.

Weiterhin weist die Schalung 10 im Bereich der Schrauben 19 Eingriffsöffnungen 25 auf, in die ein Drehmomentabtragelement 151 eingreift, um das Werkzeug 150 entsteht bzw. den Roboter 140 zu entlasten, die sonst das Drehmoment entsprechend abtragen müssten.

Neben dem Drehmomentschrauber können weitere Werkzeuge sein, nicht abschließen und nur beispielhaft aufgezählt und nicht dargestellt: Bürste, rotierbare Bürste, Düse zur Abgabe von Luft, Wasser oder Chemikalien, Scanner, optische Messeinrichtungen, Walzen.

Anschließend wird das erfindungsgemäße Verfahren anhand des gezeigten bevorzugten Ausführungsbeispiels beispielhaft näher erläutert.

An ersten Arbeitsstation 210 wird die Schalung 10 mit dem Transportmittel 112 vom Querförderer 400 in die Produktionslinie 200 eingeführt. In der Schalung 10 ist zu diesem Zeitpunkt der vorgehärtete Tübbing 500. Die Schalung 10 ist geschlossen die Seitenwände 14 und/oder die Stirnwände 15 befinden sich miteinander verschraubt in Verbindung. Zusätzlich können zu diesem Zeitpunkt die Deckelelemente (nicht dargestellt) noch in geschlossener Stellung vorgesehen sein.

Die Schalung 10 wird an der ersten Arbeitsstation 210 positionsgenau angeordnet. Gleichzeitig wird bevorzugt die Schalung und/oder der Tübbing gescannt und erfasst. Hierfür werden beispielsweise Beschriftungen oder RFID Chips mit den geeigneten Werkzeugen ausgewertet.

Die ermittelten Daten werden in ein Datenverarbeitungssystem eingegeben.

Gleichzeitig wird basierend auf diesen Daten beispielsweise von einer speicherprogrammierbaren Steuerung der notwendige Arbeitsschritt ausgewählt und die entsprechenden Steuerbefehle an den Roboter 140 zur Auswahl des entsprechend dafür benötigten Werkzeugs und zur Durchführung des Arbeitsschritts übermittelt.

An den ersten Arbeitsstation 210 wäre dieses hier beispielsweise, sofern erforderlich, dass Abschrauben der Deckel bzw. dessen Öffnen durch Lösen von Schraubenverbindungen, das Entfernen der Betoneinbauteile 26, insbesondere durch Herausschrauben, das Lösen der Eckverbindungen zwischen den Stirnwänden 15 und den Seitenwänden 14, beispielsweise durch Lösen der Schraubverbindung 18, in dem die Schraube 19 mittels des Werkzeugs 150, hier dann ein Drehmomentschrauber, herausgeschraubt wird, Öffnen der Stirnwände 15 und/oder der Seitenwände 14, beispielsweise durch Verschwenken um die Schwenkverbindung 13, beispielsweise mit einem Antrieb wie einer Zentralspindel oder Hydraulikzylindern.

Nach Abschluss des Arbeitsschritts kann ein Scanvorgang durchgeführt werden, ob der Arbeitsschritt adäquat durchgeführt und abgeschlossen wurde, indem beispielsweise Abstände der Seitenwände 14 und oder der Stirnwände 15 zueinander vermessen werden.

Die entsprechenden hierbei ermittelten Daten werden beispielsweise wieder an das Datenverarbeitungssystem übermittelt, das dann, wenn entsprechende Parameter eingehalten sind, nach einer Prüfung derselben eine Freigabe zum Weitertransport zur nächsten Arbeitsstation erteilt.

Im abgeschlossenen Zustand ist beispielsweise nach der Arbeitsstation 210 die Schalung geöffnet.

Bereits an der ersten Arbeitsstation 210 könnte gegebenenfalls, eingegliedert in das Steuerungssystem und auch durch dieses angesteuert, die Entnahme des Tübbing 500 aus der Schalung 10 erfolgen. Hierfür könnte ein Kran (nicht dargestellt) mit einer entsprechenden Hebeeinheit (nicht dargestellt) vorgesehen sein, um den Tübbing 500 aus der Schalung 10 zu entnehmen.

Alternativ, wie hier vorgesehen, erfolgt dieser Schritt an der zweiten Arbeitsstation 220. Nach der positionsgenauen Übergabe, die zwischen allen Arbeitsstationen beispielsweise auch über das Datensystem in Verbindung mit der speicherprogrammierbaren Steuerung vorgenommen wird, befindet sich die Schalung 10 positionsgenau an der zweiten Arbeitsstation 220. Auch hier erfolgt wiederum entsprechend eine Erkennung und Erfassung der Schalung und/oder des Tübbings 500. Wie bereits zuvor beschrieben wird hier jetzt beispielhaft der vorgehärtete Tübbing 500 aus der Schalung 10 entsprechend entnommen, um die weiteren Schritte wie beispielsweise dem Verbringen des vorgehärteten Tübbings 500 in ein Aushärtungslager einzuleiten.

Anschließend kann wiederum eine entsprechende Überprüfung erfolgen. Auch diese Daten werden wiederum an das Datensystem übergeben. Nach Prüfung und Freigabe wird die Schalung 10, die hier immer noch als eine geöffnete Schalung vorliegt, dann zur dritten Arbeitsstation 230 transportiert. Die Schalung 10 ist zu diesem Zeitpunkt leer, geöffnet und ungereinigt.

Auch an der dritten Arbeitsstation 230 wird die Schalung 10 positionsgenau eingebracht. Zusätzlich kann die Schalung 10 hier entsprechend wiederum erkannt werden. Gegebenenfalls kann zu diesem Zeitpunkt auch noch eine Zustandsermittlung der Schalung 10 durchgeführt werden, insbesondere hinsichtlich der Positionen und Aufklappwinkel der einzelnen Wände 14, 15.

Basierend auf diesen Daten übermittelt die speicherprogrammierbare Steuerung die entsprechenden Informationen und Arbeitsanweisungen an den Roboter 140.

Die Traverse 130 und/oder die Basis 131 des Roboters 140 werden an die jeweils notwendigen Anfahrpunkte verfahren. Weiterhin wird der Roboter 140 mit dem entsprechenden Werkzeug 150 bestückt, beispielsweise, indem der Roboter 140 sich mit dem entsprechenden Werkzeug 140 an einem Aufbewahrungsort verbindet und diese entnimmt.

Anschließend wird der entsprechende Arbeitsschritt durchgeführt, wobei es zu einer Überlagerung der Bewegungen der Traverse, der Basis sowie der Bestandteile des Roboters 140 kommen kann, um den entsprechenden Arbeitsschritt durchzuführen. Sofern nicht anders erforderlich können auch vorgenannte Bewegungen zur Optimierung dabei weggelassen werden.

An der dritten Arbeitsstation 230 wird jetzt entsprechend eine Reinigung der geöffneten Schalung 10 und eine Vorbereitung der später Beton berührenden Oberflächen der Schalung 10 wie beispielsweise der Boden 16, die Innenflächen der Seitenwände 14 und Stirnwände 15 sowie der Betoneinbauteile 26 durch Aufbringen von einem Trennmittel, wie beispielsweise Schalungsöl, durchgeführt.

Dafür wird als Werkzeug beispielsweise eine Hochdruckdüse zum Ausspritzen oder Ausblasen der Schalungsteile und/oder einer Bürste zur Reinigung ausgewählt. Die Reihenfolge ist dabei gemäß den Erfordernissen auszuwählen.

Zusätzlich kann beispielsweise auch ein Ausblasen der Formteile mit Druckluft über eine Düse erfolgen.

Gleiches gilt auch für einen eventuell vorhandenen Deckel und insbesondere auch für Ausnehmungen, in die später Einbauteile wie Dichtungen, Erektordübel oder andere Kunststoffteile eingesetzt werden.

Nach dem Abschluss der Reinigung kann dann wiederum ein Scanvorgang durchgeführt werden, um die Qualität der Reinigung entsprechend zu überprüfen.

Hierfür wird beispielsweise ein optisches Werkzeug ausgewählt, was beispielsweise anhand von Reflexionen oder dergleichen den Reinigungsgrad ermittelt. Die entsprechenden Daten werden wiederum an das Datenverarbeitungssystem und die Steuerung übergeben.

Im Anschluss daran erfolgt dann wiederum mit einem entsprechend geeigneten Werkzeug wie beispielsweise einer Düse das Einbringen des Trennungsmittels in die Schalung, ggf. gefolgt von einer erneuten Überprüfung.

Alternativ kann auch zuerst bevor das Trennungsmittel eingebracht wird, die Schalung geschlossen werden. Hierfür werden dann entsprechend in der vorliegenden Ausführungsform die Stirnwände 15 und/oder die Seitenwände 14 beispielsweise über einen Antrieb, hier beispielsweise eine Zentralspindel, die vom Drehmomentschrauber angetrieben wird, in eine Verschlussposition gebracht. Anschließend werden die Schraubverbindungen 18 zusammengeschraubt, indem beispielsweise eine entsprechende Nuss 152 auf den Kopf 27 der Schraube 19 aufgesetzt wird und diese dann gegen das Federelement 23 in das Gewindeelement 20 eingeschraubt wird.

Nach Abschluss der Schraubvorgänge kann dann wiederum eine Überprüfung mittels Scaneinheit des Hauptzustands durchgeführt werden. Alternativ ist es auch möglich, den Reinigungs- und Vorbereitungsschritt und den Schritt zum Schließen der Schalung 10 hinsichtlich der Arbeitsstationen aufzuteilen.

Nach Abschluss der Arbeitsschritte an der dritten Arbeitsstation 230 ist die Schalung 10 gereinigt, das entsprechende Trennmittel aufgebracht, und die Schalung ist entsprechend geschlossen.

Zusätzlich können auch die Betoneinbauteile 26 in den Innenraum 17 der Schalung 10 hinein bewegt worden sein, beispielsweise indem diese vom Drehmomentschrauber als Werkzeug 150 durch Schrauben bewegt wurden.

Ggf. nach Abschluss eines entsprechenden Scanschrittes kann dann die Freigabe zum Bewegen der Schalung 10 zur vierten Arbeitsstation 240 erfolgen.

Die Überprüfung eines oder aller Arbeitsschritte kann alternativ auch losgelöst vom System durch einen Mitarbeiter erfolgen, der dann entsprechend die Freigaben manuell an das System übergibt.

Anschließend wird die Schalung 10 positionsgenau in der vierten Arbeitsstation 240 angeordnet. Die Schalung wird sofern notwendig entsprechend wiederum erkannt. Weiterhin werden die Einbauteile, die der entsprechend jetzt zu fertigende Tübbing 500 enthalten soll, entsprechend in die vorbereitete Schalung eingebracht. Hierfür werden wiederum gezielte Werkzeuge 150 ausgewählt. Das Bewegen des Reporters 140 sowie des Werkzeugs 150 erfolgt wiederum durch eine Kombination der möglichen Schritte Verfahren der Traverse 130, der Basis 131 gegenüber der Traverse 130 und dem entsprechenden gesteuerten Antreiben der Arme 141, Schwenk- und Drehgelenke 142,143 sowie der damit in Verbindung stehenden Antriebe 144.

In die Schalung 10 eingebracht werden können beispielsweise ein vorgefertigtes Schutzelement, Randdichtungen, Kunststoffeinbauteile, Erektordübel, Entwässerungselemente, Temperatursensoren, Feuchtigkeitssensoren oder dergleichen.

Als Werkzeug 150 hierfür werden entsprechende Greifer mit dem Roboter 140 verbunden. Der Roboter 140 platziert die entsprechenden Einbauelemente gemäß den im Datensystem hinterlegten Positionen, wozu er von der speicherprogrammierten Steuerung die entsprechenden Steuerungsdaten erhält. Weiterhin wird entweder manuell oder ebenfalls gesteuert beispielsweise mittels eines Krans (nicht dargestellt) einen Bewährungskorb 151 oder andere Bewährungselemente in die Schalung 10 eingebracht.

Das Einbringen kann dann wiederum von einem entsprechenden Überprüfungselement überprüft werden.

Zusätzlich können Deckelelemente angebracht und/oder geschlossen werden. Weiterhin kann ggf. erneut eine Überprüfung der korrekten Anordnung der Seitenwände 14 und/oder Stirnwände 15 erfolgen.

Nach Überprüfung und Freigabe wird dann die vollständig vorbereitete Schalung 10 zur fünften Arbeitsstation 250 zum Einbringen des Beton sin die vorbereitete Schalung 10 überführt.

In der fünften Arbeitsstation 250 wird die Schalung 10 wiederum positionsgenau angeordnet und wie zuvor beschrieben ggf. erfasst. Weiterhin wird basierend auf dem zu erstellenden Tübbing 500 die Betonzusammensetzung und die Betonmenge entsprechend vorbereitet. Dieses erfolgt bevorzugt wiederum basierend auf den Daten des Datenverarbeitungssystems in Kombination mit der speicherprogrammierbaren Steuerung.

Weiterhin ist es sinnvoll, um beispielsweise die entsprechende Härtungszeit ermitteln zu können, zusätzlich beim Betonieren weitere Parameter zu erfassen, wie beispielsweise Temperatur und Feuchtigkeit. Diese Daten können dann zusammen mit den Daten hinsichtlich Betonzusammensetzung und Menge zur Steuerung der Arbeitsschritte entlang der Härtelinie 310 verwendet werden.

Weiterhin kann in der fünften Arbeitsstation 250 entsprechend die Verdichtung des Betons in der Schalung 10 in bekannter Art und Weise erfolgen.

Je nach Anforderung kann auch hier bereits eine Behandlung der Oberfläche des geschüttelten Tübbings 500 sowie ein Entfernen der Deckel erfolgen.

Zusätzlich kann auch hier wiederum ein entsprechender Überprüfungsschritt durchgeführt werden. Erfolgt dieser wie zuvor beschrieben positiv, kann dann die gefüllte Schalung 10 an die sechste Arbeitsstation 260 übergeben werden.

Nach entsprechender positionsgenauer Anordnung und ggf. Scannen bzw. Erfassen der Schalung und/oder des jetzt gefüllten Tübbings erfolgt die Glättung der Betonoberfläche des Tübbings 500 entweder in den nicht von Deckeln geschlossenen Bereich oder über die gesamte Fläche, wenn beispielsweise die Deckel geöffnet oder entfernt werden. Auch dieses kann beispielsweise automatisiert erfolgen. Auch hierfür kann beispielsweise ein zuvor beschriebenes verfahrbares Robotersystem mit entsprechenden Werkzeugen verwendet werden.

Nach Überprüfung und Freigabe wird die Schalung 10 mit dem darin befindlichen rohen Tübbing 500 beispielsweise über den Querförderer 400 einer Härtelinie 310 des Härtetunnels 300 zugeführt. Nach entsprechend gesteuerten Durchlaufens des Härtetunnels 300 wird die Schalung 10 mit dem dann vorgehärteten Tübbing 500 beispielsweise mit dem weiteren Querförderer 400 der ersten Arbeitsstation 210 der Produktionslinie 200 zugeführt.

Dem Fachmann ist klar, dass in Abhängigkeit der jeweiligen Projektanforderungen Arbeitsstationen und/Arbeitsschritte weggelassen, hinzugefügt, anders angeordnet oder verteilt werden können. Auch ist es möglich, dass die zuvor genannten Arbeitsschritte lediglich an einer Arbeitsstation bzw. an mehr oder weniger Arbeitsstationen als beschrieben durchgeführt werden.

Die Steuerung des zuvor beschriebenen Verfahrens bzw. der Produktionsanlage 100 erfolgt dabei wie beschrieben mittels einer speicherprogrammierbaren Steuerung in der die entsprechenden Arbeitsschritte und die dazugehörigen Positionen des Roboters 140 sowie der jeweiligen Werkzeuge 150 hinterlegt bzw. verarbeitet werden. Kombiniert ist dieses mit einem entsprechenden Datenverarbeitungssystem/Datenspeichersystem in dem die entsprechenden Parameter hinterlegt sind bzw. die entsprechenden Daten der Sensoren bzw. Erfassungswerkzeuge hinzugefügt werden und der Steuerung entsprechend für die Durchführung der einzelnen Arbeitsschritte bereitgestellt werden.

Mit der zuvor beschriebenen Produktionsanlage 100 sowie dem beschriebenen Verfahren in Verbindung mit der beschriebenen Steuerung ist es möglich, die Arbeitssicherheit zu erhöhen. Weiterhin lässt sich Material einsparen, wobei ein präzises und gleichbleibendes Verwenden der Materialien erfolgt. Weiterhin ist es möglich, ein hohes und konstantes Qualitätsniveau zu erreichen und einzuhalten. Weiterhin kann für jeden einzelnen Tübbing der Herstellungsprozess dokumentiert werden mit den entsprechenden Überprüfungsdaten. In Verbindung mit der Kennzeichnung der einzelnen Tübbings ist es des Weiteren möglich, somit für jedes einzelne Element im fertiggestellten Tunnel den entsprechenden Herstellungsprozess zu dokumentieren. Weiterhin ist es auf einfache Weise möglich das Verfahren und die Produktionsanlage 100 durch Veränderungen in der Steuerung sowie durch Änderungen an Werkzeugen kontinuierlich zu verbessern bzw. eine Wiederverwendung der einzelnen Komponenten nach Abschluss des Tunnelbauprojekts zu ermöglichen.

## Patentansprüche

1. Produktionsanlage zur Herstellung eines Betontübbings (500) eines Tunnelausbausystems mit wenigstens einer Schalung (10) für den Betontübbing (500), mit einer Umlaufanlage, die wenigstens eine Produktionslinie (200) mit wenigstens zwei Arbeitsstationen (210, 220, 230, 240, 250, 260) wenigstens eine Härtestation (300), und wenigstens einen Transportweg (110) zwischen den wenigstens zwei Arbeitsstationen (210, 220, 230, 240, 250, 260) zum Ausführen jeweils wenigstens eines Arbeitsschrittes zur Herstellung des Betontübbings (500) und der wenigstens einen Härtestation (300) zum Härten des eingefüllten Betons in der Schalung (10) zum Herstellen des Betontübbings (500) aufweist, wobei der Transportweg (110) wenigstens ein Transportmittel (112) aufweist, auf dem die wenigstens eine Schalung (10) angeordnet ist, **dadurch gekennzeichnet, dass** wenigstens ein Roboter (140) zum Ausführen des wenigstens einen Arbeitsschritt an einer der wenigstens zweit Arbeitsstationen (210, 220, 230, 240, 250, 260) vorgesehen ist, dass wenigstens ein Fahrweg (120) vorgesehen ist, der sich wenigstens teilweise entlang der wenigstens einen Produktionslinie (200) erstreckt, dass wenigstens ein Fahrelement (130) vorgesehen ist, an dem der wenigstens eine Roboter (140) mit einer Basis (131) angeordnet ist, und mit dem der wenigstens eine Roboter (140) entlang der wenigstens einen Produktionslinie (200) verfahrbar ist, und dass die Basis (131) des wenigstens einen Roboters (140) an dem wenigstens einen Fahrelement (130) entlang des Fahrelements (130) in die Arbeitsstation (210, 220, 230, 240, 250, 260) hinein bewegbar ist.

2. Produktionsanlage nach Anspruch 1, **dadurch gekennzeichnet, dass** der Fahrweg (120) oberhalb der Arbeitsstation (210, 220, 230, 240, 250, 260), bevorzugt auf Pfeilern (121), angeordnet ist.

3. Produktionsanlage nach Anspruch 1 oder 2, **dadurch gekennzeichnet, dass** der Fahrweg (120) jeweils wenigstens eine Fahrspur (122) beidseitig entlang der wenigstens einen Produktionslinie (200) aufweist, wobei es sich bevorzugt bei dem Fahrelement (130) um wenigstens eine Traverse handelt, die mit ihren Enden jeweils auf einer Fahrspur (122) verfahrbar ist, und/oder an der die Basis (131) des wenigstens einen Roboters (140) über die Arbeitsstation (210, 220, 230, 240, 250, 260) verfahrbar angeordnet ist.

4. Produktionsanlage nach einem der Ansprüche 1 bis 3, **dadurch gekennzeichnet, dass** der Roboter (140) ein Werkzeug (150) aufweist und so ausgeführt ist, dass das Werkzeug (150) im Raum der Arbeitsstation (210, 220, 230, 240, 250, 260) bewegbar und verschwenkbar ist, wobei bevorzugt das Werkzeug (150) wechselbar in Bezug auf den Roboter (140) ausgeführt ist, und wobei besonders bevorzugt dabei das wechselbare Werkzeug (150) in einem mit dem Roboter (140) verfahrbaren oder an der Arbeitsstation (210, 220, 230, 240, 250, 260) befindlichen Aufbewahrungsraum enthalten ist.

5. Produktionsanlage nach einem der Ansprüche 4, **dadurch gekennzeichnet, dass** es sich bei dem Werkzeug (150) um einen Drehmomentschrauber, eine Bürste, eine Walze, ein Vermessungselement, eine Düse, einen Scanner, einen Greifer, oder eine Kamera handelt.

6. Produktionsanlage nach einem der Ansprüche 1 bis 5, **dadurch gekennzeichnet, dass** die wenigstens eine Arbeitsstation (210, 220, 230, 240, 250, 260) eine Station zum Öffnen oder Schließen der Schalung (10) oder eines Deckels der Schalung (10), eine Station zum Entnehmen des Betontübbings (500), eine Station zum Reinigen der Schalung (10), eine Station zum Vorbereiten der Schalung (10) zum nachfolgenden Einbringen von Beton, eine Station zum Bestücken der Schalung (10) mit wenigstens einem Element (510) des Betontübbings(500), eine Station zum Vermessen der Schalung (10), eine Station zum Befüllen der Schalung (10) mit Beton und/oder eine Station zum Behandeln der Oberfläche des eingebrachten Betons des Betontübbings (500) ist.

7. Produktionsanlage nach Anspruch 6, **dadurch gekennzeichnet, dass** es sich bei dem wenigstens einen Element (510) um eine Dichtung, einen Schutzliner, ein Bewehrungselement, einen Sensor, insbesondere einen Temperatursensor, ein Entwässerungselement, ein Kunststoffelement und/oder ein Erektordübel handelt.

8. Verfahren zur Herstellung eines Betontübbings (500) eines Tunnelausbausystems mit wenigstens einer Schalung (10), insbesondere mit einer Produktionsanlage (100) nach einem der Ansprüchen 1 bis 7, mit den Schritten:
1. Anordnen einer Schalung (10) in einer jeweiligen Arbeitsstation (210, 220, 230, 240, 250, 260) entlang einer Produktionslinie (200) der Produktionsanlage (100), bevorzugt positionsgenau,
2. falls erforderlich, Erkennen des Schalungstyps in der Arbeitsstation (210, 220, 230, 240, 250, 260),
3. falls erforderlich, Aufnehmen des zur Durchführung eines Arbeitsschrittes notwendigen Werkzeugs (150) durch einen Roboter (140),
4. Verfahren einer Basis (131) des Roboters (140) entlang eines Fahrwegs (120) und/oder einer Traverse (131) zum X, Y-Ausrichten an eine notwendige Position zur Durchführung des Arbeitsschrittes an der Arbeitsstation (210, 220, 230, 240, 250, 260),
5. Ausführen und Abschließen des Arbeitsschritts durch den Roboter (140) mit dem dafür notwendigen Werkzeug (150),
6. falls erforderlich Überprüfen des Abschlusses des Arbeitsschrittes, bevorzugt durch den Roboter (140), mit einem dafür ausgelegten Werkzeug (150),
7. falls erforderlich, Wiederholen der Schritte 3 bis 6 zur Durchführung eines weiteren Arbeitsschrittes an der Arbeitsstation (210, 220, 230, 240, 250, 260),
8. Transport der Schalung (10) zur nächsten Arbeitsstation (210, 220, 230, 240, 250, 260),
9. falls erforderlich Wiederholen der Schritte 3 bis 8 zur Durchführung eines Arbeitsschrittes an der nächsten Arbeitsstation (210, 220, 230, 240, 250, 260).

9. Verfahren nach Anspruch 8, **dadurch gekennzeichnet, dass** es sich bei dem Werkzeug (150) um einen Drehmomentschrauber, eine Bürste, eine Walze, ein Vermessungselement, eine Düse, einen Scanner, einen Greifer, oder eine Kamera, handelt.

10. Verfahren nach Anspruch 8 oder 9, **dadurch gekennzeichnet, dass** die wenigstens eine Arbeitsstation (210, 220, 230, 240, 250, 260) eine Station zum Öffnen oder Schließen der Schalung (10) oder eines Deckels der Schalung (10), eine Station zum Entnehmen des Betontübbings (500), eine Station zum Reinigen der Schalung (10), eine Station zum Vorbereiten der Schalung (10) zum nachfolgenden Einbringen von Beton, eine Station zum Bestücken der Schalung (10) mit wenigstens einem Element (510) des Betontübbings(500), eine Station zum Vermessen der Schalung (10), eine Station zum Befüllen der Schalung (10) mit Beton und/oder eine Station zum Behandeln der Oberfläche des eingebrachten Betons des Betontübbings (500) ist.

11. Verfahren nach einem der Ansprüche 8 bis 10, **dadurch gekennzeichnet, dass** das wechselbare Werkzeug (150) aus einem mit dem Roboter (140) verfahrbaren oder an der Arbeitsstation (210, 220, 230, 240, 250, 260) befindlichen Aufbewahrungsraum entnommen oder abgelegt wird.

12. Verfahren nach einem der Ansprüche 8 bis 11, **dadurch gekennzeichnet, dass** eine Arbeitsschritt ein Öffnen oder Schließen der Schalung (10) oder des Deckels der Schalung (10), Entnehmen des Betontübbings (500), ein Reinigen der Schalung (10), ein Vorbereiten der Schalung (10) zum nachfolgenden Einbringen von Beton, ein Bestücken der Schalung (10) mit wenigsten einem Element (510) des Betontübbings (500), ein Vermessen der Schalung (10), ein Befüllen der Schalung (10) mit Beton oder ein Behandeln der Oberfläche des eingebrachten Betons des Betontübbings (500) ist.

13. Verfahren nach Anspruch 12, **dadurch gekennzeichnet, dass** es sich bei dem wenigstens einen Element (510) um eine Dichtung, einen Schutzliner, ein Bewehrungselement, einen Sensor, insbesondere einen Temperatursensor, ein Entwässerungselement, ein Kunststoffelement und/oder ein Erektordübel handelt.

14. Verfahren nach einem der Ansprüche 8 bis 13, **dadurch gekennzeichnet, dass** es sich bei dem Werkzeug (150) um einen Drehmomentschrauber, eine Bürste, eine Walze, ein Vermessungselement, eine Düse, einen Scanner, einen Greifer, oder eine Kamera, handelt.

15. Steuerung zur Durchführung des Verfahrens nach einem der Ansprüche 8 bis 14 insbesondere in Verbindung mit einer Produktionsanlage (100) nach einem der Ansprüche 1 bis 7, bei dem Arbeitsschritte an Arbeitsstationen (210, 220, 230, 240, 250, 260) abgearbeitet werden, indem Daten und/oder Sensordaten ausgewertet werden, basierend auf den Daten und/oder Sensordaten ein Roboter (140) an eine X,Y-Position entlang einer Produktionslinie positioniert wird, basierend auf den Daten und/oder Sensordaten ein Werkzeug (150) zur Ausführung des Arbeitsschritts ausgewählt wird und der Arbeitsschritt durch Übergabe von Steuerungsdaten an den Roboter (140) und/oder das Werkzeug (150) ausgeführt werden.
